# NEUE EUROPÄISCHE PATENTSCHRIFT

(11) **EP 2 328 773 B2**
(45) Veröffentlichungstag und Bekanntmachung des Hinweises auf die Entscheidung über den Einspruch: **08.07.2015**
(45) Hinweis auf die Patenterteilung: 04.07.2012
(21) Anmeldenummer: 09782897.4
(22) Anmeldetag: 11.09.2009
(51) Int. Cl.: B60K 15/03

(54) **BEHÄLTER MIT KUNSTSTOFF-SINTERSCHICHT**
CONTAINER HAVING PLASTIC SINTERED LAYER
RÉCEPTACLE PRÉSENTANT UNE COUCHE DE PLASTIQUE FRITTÉ

(30) Priorität: 24.09.2008 DE 102008048777
(43) Veröffentlichungstag der Anmeldung: 08.06.2011
(73) Patentinhaber: MAGNA STEYR Fuel Systems GmbH Werk Schwäbisch Gmünd, 73529 Schwäbisch-Gmünd (DE)
(72) Erfinder: ZANEK, Steffen, 73525 Schwaebisch Gmuend (DE); FETZER, Horst, 73079 Suessen (DE)
(74) Vertreter: Zangger, Bernd
(86) Internationale Anmeldenummer: PCT/EP2009/061784
(87) Internationale Veröffentlichungsnummer: WO 2010/034625

(56) Entgegenhaltungen:
- EP-A1- 1 591 370
- EP-A1- 1 591 370
- EP-A2- 0 930 190
- WO-A1-2005/007441
- WO-A1-2010/015006
- AT-U1- 10 684
- DE-A1-102006 054 208
- DE-A1-102006 054 208
- FR-A1- 2 635 055
- FR-A6- 2 109 489

## Beschreibung

Die Erfindung betrifft einen Behälter für Betriebsstoffe von Kraftfahrzeugen. Derartige Behälter, insbesondere Kraftstoffbehälter, finden sich üblicherweise als Anbauteile z. B. bei Nutzfahrzeugen, wo sie oftmals als genietete oder geschweißte, alternativ als Kunststoffbehälter realisiert sind. Gerade im Nutzfahrzeugbereich entstand jedoch in den letzten Jahren - bedingt durch wachsende Anforderungen an die Umweltverträglichkeit derartiger Fahrzeuge - ein Bedarf an Behältern für Betriebsstoffe, deren Funktion über die eines konventionellen Kraftstofftanks o. ä. hinausgeht. So wurde es beispielsweise in jüngerer Zeit erforderlich, im Rahmen der Maßnahmen zur Entstickung von Dieselabgasen Harnstoff im Abgassystem von Nutzfahrzeugen einzusetzen. Damit entstand ein Bedarf an Tanks, die zum Mitführen des benötigten, chemisch aggressiven Harnstoffs geeignet sind. Ein Behälter dieser Art ist aus EP 0930190 A2 bekannt.

Der vorliegenden Erfindung liegt daher die Aufgabe zugrunde, einen Behälter für Betriebsstoffe von Kraftfahrzeugen anzugeben, der chemisch stabil sowohl gegenüber dem mitgeführten Kraftstoff als auch gegenüber Additiven oder sonstigen, gegebenenfalls chemisch aggressiven Betriebsstoffen ist.

Diese Aufgabe wird durch den Behälter mit den in Anspruch 1 aufgeführten Merkmalen gelöst. Die Unteransprüche betreffen vorteilhafte Ausführungsformen und Varianten der Erfindung.

Der erfindungsgemäße Behälter für Betriebsstoffe von Kraftfahrzeugen weist eine Tragstruktur auf, deren Innenseite mindestens teilweise mit einer Kunststoffsinterschicht bedeckt ist. Ferner weist die Tragstruktur Durchtrittsöffnungen auf, wobei sich die Kunststoffsinterschicht mindestens bereichsweise durch eine Durchtrittsöffnung hindurch bis in den Außenbereich der Tragstruktur erstreckt. Bei der Tragstruktur kann es sich um eine aus einem metallischen Werkstoff wie bspw. Aluminium hergestellte Wandung handeln.

Nach Anspruch 1 der Erfindung weist der sich in den Außenbereich der Tragstruktur erstreckende Teil der Kunststoffsinterschicht einen Gewindeabschnitt auf, der mit einem Überwurfschraubelement verschraubt werden kann.

Die Kunststoffsinterschicht kann ferner in der Weise ausgebildet sein, dass sie an die Durchtrittsöffnung angrenzende Bereiche der Tragstruktur auf der Außenseite der Tragstruktur bedeckt.

Bei dem Behälter kann es sich insbesondere um einen Behälter für einen Betriebsstoff eines Kraftfahrzeuges, insbesondere einen Harnstoffbehälter, handeln.

Eine vorteilhafte Wahl für die Kunststoff-Sinterschicht besteht in einem Hochdruck-Polyäthylen, das die erforderliche chemische Inertheit gegenüber den mitzuführenden Betriebsstoffen aufweist; als Dicke der Sinterschicht haben sich ca. 1-25 mm, insbesondere ca. 2 bis 3 mm bzw. 5 bis 10 mm bewährt. Die Dicke der Kunststoffsinterschicht kann gegebenenfalls auch nur 0,5 mm betragen. Als Material für die Tragstruktur kommen metallische Materialien, insbesondere Aluminium in Frage.

Von Vorteil ist es, wenn die Kunststoff-Sinterschicht aus einem Hochdruck-Polyethylen besteht.

Von Vorteil ist es, wenn die Kunststoff-Sinterschicht eine Dicke von 1 bis 25 mm, insbesondere von ca. 5 bis 10 mm, aufweist.

Von Vorteil ist es außerdem, wenn die Tragstruktur aus Aluminium besteht.

Als Kunststoff zur Ausbildung der Sinterschicht eignet sich anstelle von Polyethylen auch Polyurethan, Polypropylen oder Polyamid. Vorgesehen sein kann auch Polyvinylchlorid (PVC).

Nachfolgend wird die Erfindung anhand der Zeichnung näher erläutert.

Es zeigt:
Fig. 1 eine erste nicht erfindungsgemäße Ausführungsform;
Fig. 1a einen Schnitt durch die erste nicht erfindungsgemässe Ausführungsform im Bereich einer Durchtrittsöffnung;
Fig. 1b einen Schnitt durch eine zweite nicht erfindungsgemäße Ausführungsform im Bereich einer Durchtrittsöffnung gemäß Fig. 1a, wobei in die Durchtrittsöffnung ein an der Außenseite der Tragstruktur fixiertes Funktionselement eingesetzt ist;
Fig. 1c eine nicht erfindungsgemässe Variante zu Fig. 1b;
Fig. 2 eine Variante der Erfindung;
Fig. 3 eine Möglichkeit, eine Kunststoffsinterschicht an der Innenseite einer Tragstruktur mechanisch zu fixierten;
Fig. 4 einen Schnitt im Bereich einer Durchtrittsöffnung einer nicht erfindungsgemäßen Ausführungsform, wobei sich die Kunststoffsinterschicht mit einem hülsenförmigen Abschnitt durch die Durchtrittsöffnung erstreckt und wobei der hülsenförmige Abschnitt wenigstens bereichsweise mit einem Gewindeabschnitt versehen ist; und
Fig. 5 einen Längsschnitt durch einen Kraftstofftank mit einem Haupttank und einem Betriebsstofftank gemäß der Erfindung.

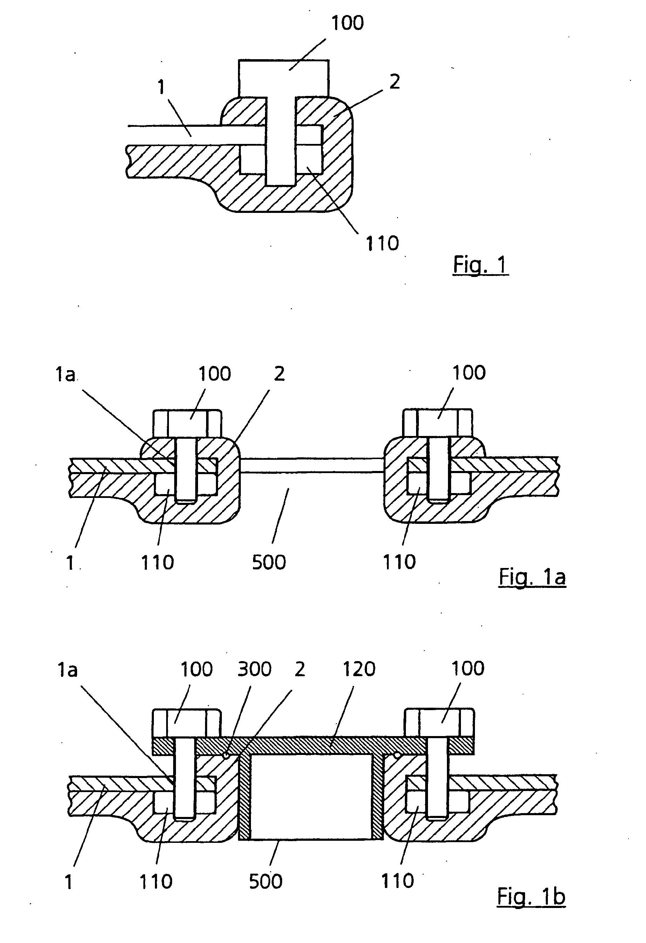

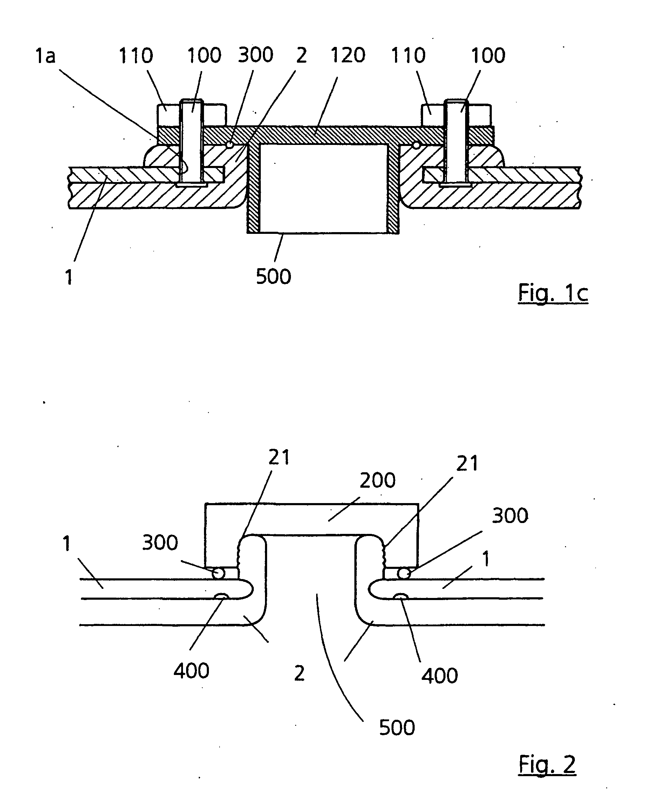

Fig. 1 zeigt eine erste nicht erfindungsgemäße Ausführungsform, bei welcher die Tragstruktur 1 in einem Bereich, der an eine Durchtrittsöffnung 500 des zugehörigen Behälters angrenzt, auch in ihrem Außenbereich die Kunststoffsinterschicht 2 aufweist. Die Tragstruktur 1 kann dabei insbesondere als metallische Wandung bspw. aus Stahl oder Aluminium realisiert sein. Die Durchtrittsöffnung 500 kann insbesondere dazu dienen, einen Tankstutzen oder auch einen Geber in das Innere des Behälters einzuführen.

Zur Vereinfachung ist in Fig. 1 lediglich eine Seite der Anordnung dargestellt; es versteht sich von selbst, dass gedanklich die gegenüberliegende Seite zu ergänzen ist.

In Fig. 1a ist die Durchtrittsöffnung vollständig dargestellt.

Die Kunststoffsinterschicht 2 umschließt den Randbereich der Tragstruktur 1 und wird mittels der Schraube 100 von außen gegen die Tragstruktur 1 gedrückt. Hierzu befindet sich an der korrespondierenden Innenseite der Tragstruktur 1 die Gewindehülse 110, in welcher die Schraube 100 verschraubt ist. Die Gewindehülse 110 kann beispielweise stoffschlüssig mit der Tragstruktur 1 verbunden sein, also geschweißt oder gelötet bzw. verklebt sein.

Auch eine temporäre Fixierung der Gewindehülsen 110 mittels eines Stehbolzens während des Sinterprozesses zum Aufbringen der Kunststoff-Sinterschicht ist denkbar. Damit würde die Gewindehülse 110 zunächst lediglich durch die Kunststoffsinterschicht 2 in ihrer Position gehalten.

Vorteilhaft hierbei wäre es, dass einerseits durch einen während des Sinterprozesses mit der Gewindehülse 110 verschraubten Stehbolzen die Dreifachfuriktionalität realisiert werden könnte, dass einerseits die Gewindehülse 110 in Position gehalten wird, andererseits das Innengewinde der Gewindehülse 110 frei von Sintermaterial gehalten wird und weiterhin in dem die Außenseite der Tragstruktur 1 bedeckenden Bereich der Sinterschicht 2 eine Aussparung zum späteren Durchtritt der Schraube 100 geschaffen würde.

Aus Fig. 1 und Fig. 1a wird erkennbar, dass mittels der Schraube 100 die Kunststoffsinterschicht 2 im Bereich der Durchtrittsöffnung wirksam in Position gehalten werden kann.

In der ersten nicht erfindungsgemässen Variante kann auf die Schraube 100 und die Gewindehülse 110 verzichtet werden, so dass die Fixierung der Kunststoffsinterschicht 2 im Bereich der Durchtrittsöffnung an der Tragstruktur 1 lediglich durch den Formschluss zwischen der Kunststoffsinterschicht 2 und der Tragstruktur 1 erreicht würde.

Die Figuren 1b und 1c zeigen jeweils Varianten der Fig. 1a. Die Fig. 1b und die Fig. 1c unterscheiden sich lediglich in der Anordnung bzw. Ausbildung der Verbindungsglieder 100 bzw. 110.

Wie sich aus Fig. 1b ergibt, ist in einem an die Durchtrittsöffnung 500 angrenzenden Bereich wenigstens ein Verbindungsglied 110 angeordnet. Bei dem Verbindungsglied 110 handelt es sich gemäß Fig. 1b um eine Gewindehülse 110. Es kann sich dabei jedoch auch um eine Gewindemutter, eine Einlegemutter oder dergleichen handeln. Die Gewindehülse 110 kann an der Innenseite der Tragstruktur im Bereich der Durchtrittsöffnung 500 angeordnet sein. Die Gewindehülse 110 kann dort bereits vor Durchführung des Sinterprozesses, d. h. vor Aufbringung der Kunststoffsinterschicht 2 fixiert sein. Hierzu wird auf die bezüglich Fig. 1 beschriebenen Ausgestaltungen verwiesen. Vorzugsweise kann die Gewindehülse 110 mit der Innenseite der Tragstruktur verprägt oder verclincht werden. Grundsätzlich kann die Verbindung durch ein beliebiges geeignetes form- und/oder stoffschlüssiges Verbindungsverfahren erfolgen.

Wie sich aus Fig. 1b ergibt, sind vorzugsweise mehrere Verbindungsglieder 110 vorgesehen. Besonders eignet es sich, zwei, drei, vier oder mehr Verbindungsglieder 110 einzusetzen. Die Verbindungsglieder 110 können dabei vorzugsweise gleichmäßig um die Durchtrittsöffnung 500 verteilt angeordnet sein.

Wie sich aus Fig. 1b ergibt, kann das Verbindungsglied 110 wenigstens bereichsweise von der Kunststoffsinterschicht 2 umschlossen sein. Im Ausführungsbeispiel ist vorgesehen, dass das Verbindungsglied 110 mit Ausnahme der Fläche, die an die Innenseite der Tragstruktur 1 anliegt, vollständig von der Kunststoffsinterschicht 2 umschlossen ist. Ferner ist gemäß Fig. 1b vorgesehen, dass die Kunststoffsinterschicht 2 an die Durchtrittsöffnung 500 angrenzende Bereiche der Tragstruktur 1 auf der Außenseite der Tragstruktur 1 bedeckt.

Wie sich des weiteren aus Fig. 1b ergibt, ist es vorteilhaft, wenn das Verbindungsglied 110, gemäß Fig. 1b also die Gewindehülse, so an der Innenseite der Tragstruktur angeordnet ist, dass diese mit einer Öffnung 1a in der Tragstruktur 1 korrespondiert. Somit ist es einfach möglich, dass ein zweites Verbindungsglied 100, bei dem es sich in der in Fig. 1b dargestellten Ausführungsform um eine Schraube 100 handelt, mit der Gewindehülse 110 verbunden bzw. verschraubt werden kann.
Gemäß der in Fig. 1b dargestellten Ausführungsform ist vorgesehen, dass zwischen dem (ersten) Verbindungsglied 110 und dem (zweiten) Verbindungsglied 100, d. h. zwischen der Gewindehülse 110 und der Schraube 100, ein Funktionselement 120 angeordnet ist.

Das Verbindungsglied 110 ist somit als Schnittstelle ausgebildet, damit mittels dem zweiten Verbindungsglied 100 an der Außenseite der Tragstruktur 1 ein Funktionselement 120 anordnet werden kann. Das Funktionselement kann sich durch die Durchtrittsöffnung 500 in den Innenraum der Tragstruktur 1 erstrecken.

Im Ausführungsbeispiel ist das Funktionselement 120 ein Geber. Bei dem Funktionselement 120 kann es sich aber auch um einen beliebigen Adapter, z. B. eine Pumpe, handeln.

Das Funktionselement 120 ist derart ausgebildet bzw. angeordnet, dass dieses mit einer Anlagefläche auf der Oberseite der Kunststoffsinterschicht 2, welche die Außenseite der Tragstruktur 1 in einem an die Durchtrittsöffnung 500 angrenzenden Bereich bedeckt, aufliegt. Zwischen der Oberseite der Kunststoffsinterschicht 2 und dem Funktionselement 120 kann dabei wenigstens bereichsweise eine Dichtung 300 eingelegt bzw. vorgesehen sein, so wie dies in Fig. 1b dargestellt ist.

Die Kunststoffsinterschicht 2, welche die Außenseite der Tragstruktur im Bereich der Durchtrittsöffnung 500 bedeckt, kann sich so weit erstrecken, dass der Teil des ersten und/oder zweiten Verbindungsglieds, welcher auf der Außenseite der Tragstruktur 1 angeordnet ist und/oder sich durch eine Öffnung 1a nach außen erstreckt, vollständig mit eingesintert bzw. umschlossen ist (siehe Fig. 1, Fig. 1a, Fig. 1c). Dies ist jedoch nicht zwingend notwendig. Es kann ausreichend sein, dass sich die Kunststoffsinterschicht 2, wie in Fig. 1b dargestellt, nur über einen relativ geringen Bereich der Außenseite der Tragstruktur 1 erstreckt. Die Erfinder haben erkannt, dass es ausreichend ist, wenn die Kunststoffsinterschicht 2 sich so weit erstreckt, dass eine geeignete Auflage für das Funktionselement 120 ausgebildet ist.

Es kann vorgesehen sein, dass die Kunststoffsinterschicht 2, welche die Außenseite der Tragstruktur 1 bedeckt, bereits durch das zum Rotationssintern eingesetzte Werkzeug eine geeignete Fläche erhält, auf der die Anlagefläche bzw. eine Unterseite eines Funktionselements 120 aufliegen kann. Es ist jedoch auch möglich, dass die Oberseite der Kunststoffsinterschicht 2, welche an die Anlagefläche des Funktionselements 120 angrenzt, nachbearbeitet wird.
Fig. 1c zeigt eine nicht erfindungsgemässe Variante der nicht erfindungsgemässen Ausführungsform nach Fig. 1b. Grundsätzlich können alle Merkmale, die bereits bezüglich der Fig. 1b bzw. bezüglich der Fig. 1a und der Fig. 1 beschrieben wurden, auch bei der Variante gemäß Fig. 1c eingesetzt werden. Nachfolgend wird daher nur auf die Abweichungen näher eingegangen. Gemäß Fig. 1c ist das Verbindungsglied, welches an der Tragstruktur 1, vorzugsweise an dessen Innenseite angeordnet oder befestigt ist, als Schraube 100 oder vorzugsweise als Stehbolzen oder Schweißbolzen ausgebildet. Die Anbindung kann (auch) in der Art und Weise erfolgen wie dies bereits bezüglich der Gewindehülse 110 gemäß Fig. 1b beschrieben wurde. Die Möglichkeiten, einen Schweißbolzen an einen metallischen Gegenstand, vorliegend an der Tragstruktur 1, anzubinden, sind aus dem allgemeinen Stand der Technik ebenfalls bekannt.

Das Verbindungsglied bzw. die Schraube 100 gemäß der Ausführungsform nach der Fig. 1c kann mit einer Öffnung 1a in der Tragstruktur korrespondieren bzw. fluchten. Die Schraube 100 erstreckt sich dabei durch die Öffnung 1a und weist vorzugsweise eine derartige Höhe auf, dass eine Gewindehülse 110 bzw. eine Gewindemutter oder dergleichen aufgeschraubt werden kann. Vorgesehen sein kann dabei ferner, dass die Kunststoffsinterschicht 2 an der Außenseite der Tragstruktur 1 die Schraube 100 umgibt. Dadurch ergibt sich eine besonders stabile Verbindung. Wie sich ferner aus der Fig. 1c ergibt, kann vorgesehen sein, dass auf der Oberseite der die Außenseite der Tragstruktur 1 bedeckenden Kunststoffsinterschicht 2 ein Funktionselement 120, vorzugsweise wiederum ein Geber, befestigt wird. Dies kann dadurch erfolgen, dass eine Anlagefläche bzw. eine Unterseite des Funktionselements 120 auf die Oberseite der Kunststoffsinterschicht 2 aufgesetzt wird und zwar derart, dass die Schraube 100 eine geeignete Bohrung in dem Funktionselement 120 durchdringt. Durch ein Aufschrauben einer Gewindehülse 110 bzw. einer Mutter lässt sich dann das Funktionselement 120 einfach und zuverlässig fixieren.

Gemäß Fig. 1c ist vorzugsweise vorgesehen, dass zwei, drei, vier oder mehr stiftförmige Verbindungsglieder, vorliegend Schrauben 100 - vorzugsweise gleichmäßig - um die Durchtrittsöffnung 500 angeordnet sind. Gemäß Fig. 1c stellt die Gewindehülse 110 das zweite Verbindungsglied dar.
Die nicht erfindungsgemässen Ausführungsformen gemäß den Figuren 1b und 1c ermöglichen es in besonders einfacher Weise, eine Schnittstelle auszubilden, um Funktionselemente 120 mit dem Behälter zu verbinden. Ferner ermöglichen es die Ausführungsformen gemäß den Figuren 1, 1a, 1b und 1c, dass ein Werkzeug zur Durchführung des Rotationssinterverfahrens zuverlässig und einfach gegenüber dem Behälter fixiert werden kann. Das Werkzeug kann in einfacher Weise Bolzen, Schrauben, Muttern oder dergleichen aufweisen, die mit den an der Tragstruktur befestigten Verbindungsgliedern korrespondieren, so dass eine Fixierung während des Rotationssinterprozesses möglich ist. Die Verbindungsglieder dienen somit als Haltepunkte für das Werkzeug zur Durchführung des Rotationssinterprozesses.

Fig. 2 zeigt eine Variante der Erfindung, bei welcher die Kunststoffsinterschicht 2 ebenfalls die Durchtrittsöffnung 500 durchtritt und den Gewindeabschnitt 21 aufweist, an welchem das Überwurfschraubelement 200 verschraubt ist.

Bei dem Überwurfschraubelement 200 kann es sich insbesondere um einen Deckel wie beispielsweise einen Tankdeckel für einen Harnstoffbehälter eines Kraftfahrzeuges handeln. Zur Verbesserung der Dichtigkeit ist der Deckel 200 mit dem O-Ring 300 versehen, der auf der Außenseite der Tragstruktur 1 anliegt.

Die Kunststoffsinterschicht 2 wurde im vorliegenden Beispiel durch das Überwurfschraubelement 200 gegen die Innenseite der Tragstruktur 1 fixiert.

Zur weiteren Verbesserung der mechanischen Stabilität der gezeigten Anordnung ist die Tragstruktur 1 auf ihrer Innenseite im Bereich der Durchtrittsöffnung 500 mit den Aussparungen 400 versehen, in die ebenfalls Sintermaterial eindringen kann, was dazu führt, dass ein Abschieben der Kunststoffsinterschicht 2 in Richtung des inneren Bereichs der Durchtrittsöffnung 500 aufgrund des Formschlusses zwischen der Kunststoffsinterschicht 2 und den Aussparungen 400 vermieden werden kann.

Ein Vorteil der Erfindung besteht darin, dass durch die erfindungsgemäße Gestaltung der Kunststoffsinterschicht 2 im Bereich der Durchtrittsöffnungen verhindert wird, dass das Medium, welches sich in dem Behälter befindet, die Außenseite der Tragstruktur 1 erreicht, die typischerweise nicht von der schützenden Kunststoffsinterschicht2 bedeckt ist. Insbesondere im Fall einer Ausbildung des Behälters als Harnstoffbehälter kann durch die erfindungsgemäße Lösung wirksam vermieden werden, dass gerade im Bereich eines Tankstutzens der Harnstoff eine beispielsweise aus Aluminium gebildete Tragstruktur 1 erreicht. In diesem Fall würden sich Aluminiumionen bilden, die beim Eintritt in den Motor eines zugehörigen Fahrzeugs ausgesprochen schädliche Auswirkungen haben würden.

Somit kann in vorteilhafter Weise eine dreifache Funktionalität der erfindungsgemäß gestalteten Durchtrittsöffnungen des Behälters geschaffen werden.

Erstens wird eine Durchtrittsöffnung bereit gestellt, welche zweitens durch die sie teilweise umgebende Kunststoffsinterschicht vor dem aggressiven Medium geschützt ist und drittens eine zusätzliche mechanische Stabilisierung der Kunststoffsinterschicht 2 erreicht.

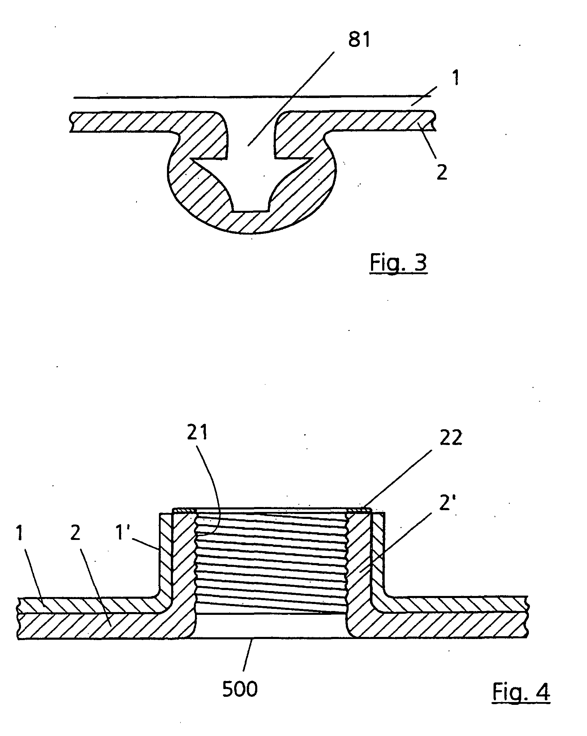

Fig. 3 zeigt eine weitere Variante einer möglichen Hinterschneidung 81 auf der Innenseite der Tragstruktur 1. Die Hinterschneidung 81 ist dabei in der Art eines in das Innere des Behälters ragenden pilzförmigen Körpers ausgebildet, der vollständig von der Kunststoffsinterschicht 2 umschlossen ist. Dabei kann die Hinterschneidung 81 beispielsweise durch Punktschweißen oder Kleben oder auch durch ein beliebiges anderes Fügeverfahren mit der Innenseite der Tragstruktur 1 verbunden sein.

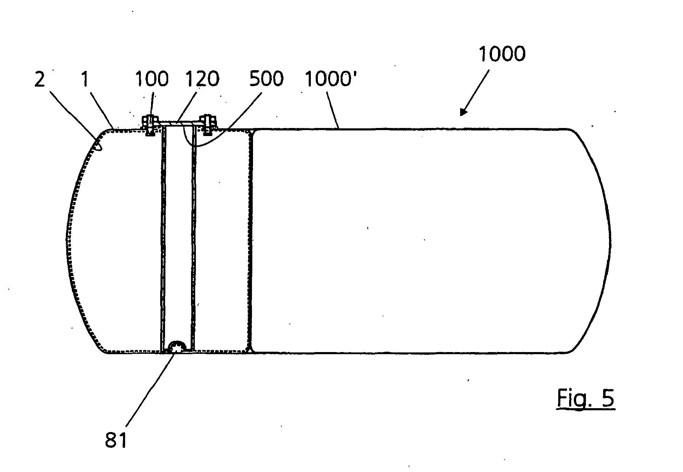

Bei der in Fig. 3 dargestellten Hinterschneidung kann es sich auch nur um eine einfache Fixierhilfe 81 für die Kunststoffsinterschicht 2 handeln. Hierzu ist es nicht notwendig, dass eine Hinterschneidung ausgebildet ist. Es eignet sich jede beliebige Form, um einen Verkrallungspunkt für die Kunststoffsinterschicht 2 auszubilden, beispielsweise ein Fixierstift, ein Fixierbolzen oder dergleichen. Die Erfinder haben erkannt, dass sich auch dadurch bereits der gewünschte Effekt einstellt. Ferner kann die Fixierhilfe 81 auch zur Fixierung des Funktionselements 120 dienen. Hierzu wird zum Verständnis auch auf die Fig. 5 verwiesen. Nachdem die Fixierhilfe 81 durch den Rotationssinterprozess mit einer Kunststoffsinterschicht 2 versehen ist, kann diese eine Form aufweisen, die mit einem entsprechenden Gegenelement an dem Funktionselement 120 korrespondiert. Erreicht wird dadurch, dass das Funktionselement 120 nicht nur im Bereich der Durchtrittsöffnung 500 fixiert ist, sondern mindestens an einer zweiten Stelle. Dies ist insbesondere deswegen von Vorteil, da Betriebsstoffe, beispielsweise ein Harnstoff, bei entsprechenden Temperaturen gefrieren können. Die innerhalb des Behälters dann herumtreibenden gefrorenen Stücke können gegen das Funktions element 120 stossen und dieses beschädigen. Die Fixierhilfe 81 erhöht die Stabilität des Funktionselements 120 innerhalb des Behälters. Von Vorteil ist es, wenn die Fixierhilfe 81, so wie in Fig. 5 dargestellt, an einem Bereich der Innenseite der Tragstruktur 1 angeordnet ist, welcher der Durchtrittsöffnung 500 gegenüberliegt. Vorzugsweise ist die Durchtrittsöffnung 500 im Bereich einer Oberseite des Behälters angeordnet, während die Fixierhilfe 81 im Bereich einer Unterseite angeordnet ist. Die genaue Positionierung der Fixierhilfe 81 kann von der Form und dem Verlauf des Funktionselements 120, vorzugsweise eines Gebers, abhängig sein.

Fig. 4 zeigt eine nicht erfindungsgemässe Ausgestaltung, bei der der sich in den Außenbereich erstreckende Teil der Kunststoffsinterschicht 2 an seinem Innendurchmesser wenigstens bereichsweise einen Gewindeabschnitt 21 aufweist.

Die Kunststoffsinterschicht 2 erstreckt sich hülsenförmig durch die Durchtrittsöffnung 500 und weist wenigstens bereichsweise einen Gewindeabschnitt 21 auf. Dadurch wird die Höhe der Durchtrittsöffnung 500 vergrößert. Ferner wird es durch die Ausbildung eines Gewindeabschnitts 21 am Innendurchmesser des hülsenförmigen Abschnitts 2' der Kunststoffsinterschicht 2 ermöglicht, dass ein Schraubelement 200, beispielsweise ein Tankdeckel, eingeschraubt werden kann. Ferner ermöglicht es die in Fig. 4 dargestellte Variante, dass auch Funktionselemente 120 entsprechend eingeschraubt werden können. Vorzugsweise ist vorgesehen, dass an der Oberseite des hülsenförmigen Abschnitts 2' der Kunststoffsinterschicht eine Dichtung 22 ausgebildet ist. In Verbindung mit einem Tankdeckel oder einem Funktionselement ergibt sich damit eine vorteilhafte Abdichtung.

Der hülsenförmige Abschnitt 2' der Kunststoffsinterschicht kann beispielsweise durch eine geeignete Form des Werkzeugs, welches zum Rotationssintern eingesetzt wird, hergestellt werden (sowohl das Gewinde 21 als auch die Form und der Verlauf des Außenumfangs des hülsenförmigen Abschnitts 2').

Von Vorteil kann es sein, wenn die metallische Tragstruktur 1 im Bereich der Durchtrittsöffnung 500 eine Form aufweist, welche die Ausbildung eines hülsenförmigen Abschnitts unterstützt, d.h. dass die metallische Tragstruktur 1 im Bereich der Durchtrittsöffnung 500 einen hochgezogenen Rand bzw. einen hülsenförmigen Abschnitt 1' aufweist. Alternativ ist es auch möglich, einen vorzugsweise ringförmigen Abschnitt im Bereich der Durchtrittsöffnung 500 auf die metallische Tragstruktur aufzubringen bzw. aufzuschweißen. Dadurch erhält die metallische Tragstruktur 1 in dem Bereich der Durchtrittsöffnung 500 eine Form, die das Ausbilden einer Kunststoffsinterschicht 2 an deren Innenseite, so wie dies in Fig. 4 dargestellt ist, vereinfacht.

Fig. 5 zeigt einen Kraftstoffbehälter 1000 mit einem Haupttank 1000' für einen Kraftstoff und einen Betriebsstofftank 1 für einen Betriebsstoff. Der Haupttank 1000' kann in bekannter Weise, vorzugsweise aus Stahl oder Aluminium, hergestellt werden. Es kann sich dabei vorzugsweise um einen Haupttank 1000' für ein Nutzfahrzeug mit einem Fassungsvermögen von 500 bis 1500 Liter handeln, welcher in bekannter Art und Weise hergestellt werden kann. Der Betriebsstofftank 1 ist durch einen Behälter gemäß einem der Ansprüche 1 bis 25 gebildet. Der Betriebsstofftank 1 ist gemäß dem in Fig. 5 dargestellten Ausführungsbeispiel mit dem Haupttank 1000' zu einer Einheit verbunden, vorzugsweise dadurch, dass die metallische Tragstruktur des Betriebsstofftanks 1 mit dem Haupttank 1000' verschweißt ist.

Strichliniert in Fig. 5 dargestellt ist die Kunststoffsinterschicht 2 innerhalb des Betriebsstofftanks 1. Ferner ist ein Funktionselement 120 in einer beispielhaften Ausgestaltung als Geber dargestellt, welcher im Bereich der Durchtrittsöffnung 500 durch mehrere Verbindungsglieder 100 fixiert ist. Ferner ist eine Fixierhilfe 81 in einem Bereich vorgesehen, welcher der Durchtrittsöffnung 500 wenigstens annähernd gegenüberliegt.

Der in Fig. 5 dargestellte Betriebsstoffbehälter 5 kann in dieser Art und Weise auch unabhängig von dem Haupttank 1000' ausgebildet sein.

## Patentansprüche

1. Behälter für Betriebsstoffe von Kraftfahrzeugen, wobei der Behälter eine Tragstruktur (1) aufweist und die Innenseite der Tragstruktur (1) mindestens teilweise mit einer Kunststoffsinterschicht (2) bedeckt
ist, und wobei die Tragstruktur (1) Durchtrittsöffnungen (500) aufweist, wobei sich die Kunststoffsinterschicht (2) mindestens bereichsweise durch eine Durchtrittsöffnung (500) hindurch bis in den Außenbereich der Tragstruktur (1) erstreckt,
**dadurch gekennzeichnet, dass** der sich in den Außenbereich der Tragstruktur (1) erstreckende Teil der Kunststoffsinterschicht (2) einen Gewindeabschnitt (21) aufweist, der mit einem Überwurfschraubelement (200) verschraubt werden kann.

2. Behälter nach Anspruch 1,
**dadurch gekennzeichnet, dass** in einem an die Durchtrittsöffnung (500) angrenzenden Bereich wenigstens ein Verbindungsglied (100,110) angeordnet ist.

3. Behälter nach Anspruch 2,
**dadurch gekennzeichnet, dass** das Verbindungsglied (100,110) wenigstens bereichsweise von der Kunststoffsinterschicht (2) umschlossen ist und/ oder das Verbindungsglied (100,110) mit der Tragstruktur (1) form- und/oder stoffschlüssig verbunden ist und/oder die Kunststoffsinterschicht (2) an die Durchtrittsöffnung (500) angrenzende Bereiche der Tragstruktur (1) auf der Außenseite der Tragstruktur (1) bedeckt.

4. Behälter nach Anspruch 2 oder 3,
**dadurch gekennzeichnet, dass** das Verbindungsglied (100,110) an der Innenseite der Tragstruktur (1) angeordnet ist und mit einer Öffnung (1a) in der Tragstruktur (1) korrespondiert und/oder das Verbindungsglied (100,110) als Schnittstelle ausgebildet ist, um mittels einem zweiten Verbindungsglied (110,100) an der Außenseite der Tragstruktur ein Funktionselement (120) anzuordnen, welches sich durch die Durchtrittsöffnung (500) in den Innenraum der Tragstruktur (1) erstreckt.

5. Behälter nach einem der Ansprüche 2 bis 4,
**dadurch gekennzeichnet, dass** das Verbindungsglied eine Gewindemutter, eine Gewindehülse (110), eine Schraube (100), ein Stehbolzen oder ein Schweißbolzen ist.

6. Behälter nach Anspruch 5,
**dadurch gekennzeichnet, dass** die Schraube (100), der Stehbolzen oder Schweißbolzen durch die Öffnung (1a) durchtritt, so dass außenseitig als zweites Verbindungsglied eine Gewindemutter oder eine Gewindehülse (110) aufschraubbar ist.

7. Behälter nach Anspruch 6,
**dadurch gekennzeichnet, dass** zwischen der Schraube (100), dem Stehbolzen oder dem Schweißbolzen und der Gewindemutter oder der Gewindehülse (110) das Funktionselement (120) festgelegt ist.

8. Behälter nach einem der Ansprüche 1 bis 7,
**dadurch gekennzeichnet, dass** auf der Innenseite der Tragstruktur wenigstens eine Fixierhilfe (81) für die Kunststoffsinterschicht (2) ausgebildet ist.

9. Kraftstoffbehälter, **gekennzeichnet durch** einen Haupttank (1000') für einen Kraftstoff und einen Betriebsstofftank (1) für einen Betriebsstoff, wobei der Betriebsstofftank (1) **durch** einen Behälter nach einem der Ansprüche 1 bis 8 gebildet und mit dem Haupttank (1000') zu einer Einheit zusammengesetzt ist.

## Claims

1. Container for operating substances of motor vehicles, wherein the container has a supporting structure (1) and the inner side of the supporting structure (1) is at least partially covered with a plastics sintered layer (2), and wherein the supporting structure (1) has passage openings (500), and wherein at least regions of the plastics sintered layer (2) extend through a passage opening (500) into the outer region of the supporting structure (1), **characterized in that** that part of the plastics sintered layer (2) which extends into the outer region of the supporting structure (1) has a threaded section (21) which can be screwed with a union screwing element (200).

2. Container according to Claim 1, **characterized in that** at least one connecting element (100, 110) is arranged in a region adjacent to the passage opening (500).

3. Container according to Claim 2, **characterized in that** at least regions of the connecting element (100, 110) are enclosed by the plastics sintered layer (2), and/or the connecting element (100, 110) is connected to the supporting structure (1) in a form-fitting and/or cohesively bonded manner, and/or the plastics sintered layer (2) covers regions of the supporting structure (1) that are adjacent to the passage opening (500) on the outer side of the supporting structure (1).

4. Container according to Claim 2 or 3, **characterized in that** the connecting element (100, 110) is arranged on the inner side of the supporting structure (1) and corresponds to an opening (1a) in the supporting structure (1), and/or the connecting element (100, 110) is designed as an intersection in order to arrange a functional element (120) on the outer side of the supporting structure by means of a second connecting element (110, 100), the functional element extending through the passage opening (500) into the interior of the supporting structure (1).

5. Container according to one of Claims 2 to 4, **characterized in that** the connecting element is a threaded nut, a threaded sleeve (110), a screw (100), a stud bolt or a welding bolt.

6. Container according to Claim 5, **characterized in that** the screw (100), the stud bolt or welding bolt passes through the opening (1a) such that a threaded nut or a threaded sleeve (110) can be screwed onto the outer side as the second connecting element.

7. Container according to Claim 6, **characterized in that** the functional element (120) is fixed between the screw (100), the stud bolt or the welding bolt and the threaded nut or the threaded sleeve (110).

8. Container according to one of Claims 1 to 7, **characterized in that** at least one fixing aid (81) for the plastics sintered layer (2) is formed on the inner side of the supporting structure.

9. Fuel tank, **characterized by** a main tank (1000') for a fuel and an operating substance tank (1) for an operating substance, wherein the operating substance tank (1) is formed by a container according to one of Claims 1 to 8 and is fitted together with the main tank (1000') to form a unit.

## Revendications

1. Réceptacle pour agents propulsifs de véhicules automobiles, le réceptacle présentant une structure porteuse (1) et le côté intérieur de la structure porteuse (1) étant revêtu au moins en partie d'une couche de plastique fritté (2) et la structure porteuse (1) présentant des ouvertures de passage (500), la couche de plastique fritté (2) s'étendant au moins en partie à travers une ouverture de passage (500) jusque dans la région extérieure de la structure porteuse (1),
**caractérisé en ce que**
la partie de la couche de plastique fritté (2) s'étendant dans la région extérieure de la structure porteuse (1) présente une portion filetée (21) qui peut être vissée avec un élément d'accouplement par vissage (200).

2. Réceptacle selon la revendication 1,
**caractérisé en ce**
**qu'**au moins un organe de liaison (100, 110) est disposé dans une région adjacente à l'ouverture de passage (500).

3. Réceptacle selon la revendication 2,
**caractérisé en ce que**
l'organe de liaison (100, 110) est au moins en partie entouré par la couche de plastique fritté (2) et/ou l'organe de liaison (100, 110) est connecté à la structure porteuse (1) par engagement par correspondance géométrique et/ou par liaison de matière et/ou la couche de plastique fritté (2) recouvre des régions de la structure porteuse (1) adjacentes à l'ouverture de passage (500) du côté extérieur de la structure porteuse (1).

4. Réceptacle selon la revendication 2 ou 3,
**caractérisé en ce que**
l'organe de liaison (100, 110) est disposé du côté intérieur de la structure porteuse (1) et correspond à une ouverture (1a) dans la structure porteuse (1) et/ou l'organe de liaison (100, 110) est réalisé sous forme d'interface, afin de disposer au moyen d'un deuxième organe de liaison (110, 100) sur le côté extérieur de la structure porteuse un élément fonctionnel (120) qui s'étend à travers l'ouverture de passage (500) dans l'espace interne de la structure porteuse (1).

5. Réceptacle selon l'une quelconque des revendications 2 à 4,
**caractérisé en ce que**
l'organe de liaison est un écrou fileté, une douille filetée (110), une vis (100), un goujon fileté ou un boulon à souder.

6. Réceptacle selon la revendication 5,
**caractérisé en ce que**
la vis (100), le goujon fileté ou le boulon à souder traverse l'ouverture (1a), de sorte que du côté extérieur un écrou fileté ou une douille filetée (110) puisse être vissé(e) en tant que deuxième organe de liaison.

7. Réceptacle selon la revendication 6,
**caractérisé en ce**
**qu'**entre la vis (100), le goujon fileté ou le boulon à souder et l'écrou fileté ou la douille filetée (110) est fixé l'élément fonctionnel (120).

8. Réceptacle selon l'une quelconque des revendications 1 à 7,
**caractérisé en ce**
**qu'**au moins un auxiliaire de fixation (81) pour la couche de plastique fritté (2) est réalisé sur le côté intérieur de la structure porteuse.

9. Réceptacle pour carburant,
**caractérisé par**
un réservoir principal (1000') pour un carburant et un réservoir d'agent propulsif (1) pour un agent propulsif, le réservoir d'agent propulsif (1) étant formé par un réceptacle selon l'une quelconque des revendications 1 à 8 et étant assemblé au réservoir principal (1000') pour former une unité.
